# EUROPÄISCHE PATENTSCHRIFT

(11) **EP 0 413 275 B1**
(45) Veröffentlichungstag und Bekanntmachung des Hinweises auf die Patenterteilung: **20.07.1994**
(21) Anmeldenummer: 90115440.1
(22) Anmeldetag: 11.08.1990
(51) Int. Cl.: H01M 10/54, C22B 7/00

(54) **Verfahren zur Entsorgung von Speicherzellen**
Method for treatment of storage batteries
Procédé de traitement des éléments d'accumulateurs

(30) Priorität: 18.08.1989 DE 3927225
(43) Veröffentlichungstag der Anmeldung: 20.02.1991
(73) Patentinhaber: Asea Brown Boveri Aktiengesellschaft, 68309 Mannheim (DE)
(72) Erfinder: Bauer, Roland, Dr., D-6947 Laudenbach (DE)
(74) Vertreter: Rupprecht, Klaus, Dipl.-Ing.

(56) Entgegenhaltungen:
- EXTENDED ABSTRACTS, Band 81-2, Oktober 1981, Seiten 50-52; J.P. PEMSLER et al.:"Recycle of battery components"

## Beschreibung

Die Erfindung bezieht sich auf ein Verfahren zur Entsorgung von Speicherzellen gemäß dem Oberbegriff des Patentanspruches 1.

Ein solches Verfahren kommt dort zur Anwendung, wo beispielsweise Speicherzellen von Hochtemperatur-Speicherbatterien, die aus Altersgründen nicht mehr zum Einsatz kommen, entsorgt werden müssen. Die bis jetzt bekannten Maßnahmen zur Entsorgung von Speicherzellen sind unbefriedigend, da hierbei schädliche Abfallprodukte entstehen, deren Endlagerung mit hohen Kosten verbunden ist.

Der Erfindung liegt ausgehend hiervon die Aufgabe zugrunde, ein Verfahren aufzuzeigen, mit dem wiederaufladbare Speicherzellen so entsorgt werden können, daß alle Bauteile, Reaktanten und Reaktionsprodukte nahezu vollständig wiederverwertet werden können.

Diese Aufgabe wird durch die Merkmale des Patentanspruches 1 gelöst.

Die Zerlegung der Speicherzellen kann ohne Schutzgas durchgeführt werden. Gleichgültig, in welchem Ladezustand sich die jeweiligen Speicherzellen befinden, sie können mit dem erfindungsgemäßen Verfahren alle in gleicher Weise entsorgt werden. Die Entsorgung von Speicherzellen, bei denen die Festelektrolyte Risse aufweisen, ist ebenfalls mögich. Das Öffnen der Speicherzellen erfolgt gefahrlos, da die Speicherzellen vorab in ein wachsähnliches Material, vorzugsweise Paraffin, eingebettet werden. Das Aufschmelzen des Natriums erfolgt in einem Paraffinbad, das eine Temperatur aufweist, die unterhalb des Schmelzpunktes von Schwefel liegt. Exotherme Reaktionen mit dem flüssigen Natrium treten nur in sehr abgeschwächter Form auf und bleiben lokal begrenzt. Nach dem Entfernen des Natriums aus jeder Speicherzelle können das Gehäusematerial und die Schwefelelektrode auf einfache Weise voneinander getrennt, gereinigt und weiterverarbeitet werden.
Mit dem erfindungsgemäßen Verfahren können die Speicherzellen so entsorgt werden, daß etwa 70 Gew.% des gesamten Speicherzellenmaterials bei der Herstellung von neuen Speicherzellen wiederverwendbar ist. Das restliche Material kann zur Herstellung anderer Produkte verwendet oder schadstoffrei gelagert werden. Insbesondere lassen sich 7 bis 5 Gew.% des Natriums, das aus einer Speicherzelle entnommen wird, für die Füllung neuer Speicherzellen verwenden. 10,5 Gew.% des Edelstahls der Speicherzelle können als Stahlschrott weiterverarbeitet werden. 27 Gew.% der Aluminiumlegierung lassen sich bei Umschmelzungsverfahren wieder verwenden. 25 Gew.% der Natriumpolysulfide und des elementaren Schwefels können aus dem Granulat extrahiert werden, zu dem das Schwefelelektrodenmaterial verarbeitet wird. Diese Materialien können zur Herstellung von Schwefelfarbstoffen verwendet werden. 26 Gew.% der Bondteile, des extrahierten Keranmikbruchs sowie des Graphitfilzes sind schadstoffreie, deponiefähige Abfallstoffe. Durch eine themische Entsorgung des aus der Schwefelelektrode hergestellten Granulats können sogar 97Gew.% des Speicherzellenmaterials wiederverwendet werden. Reste von anhaftendem Natrium bzw. Natriumpolysulfid müssen naßchemisch abgelöst werden.

Weitere erfindungswesentliche Merkmale sind in den Unteransprüchen gekennzeichnet.

Das erfindungsgemäße Verfahren wird nachfolgend anhand einer schematischen Zeichnung näher erläutert.

Die einzige zu der Beschreibung gehörende Zeichung zeigt eine Speicherzelle 1, welche durch ein Gehäuse 2 aus Leichtmetall nach außenhin begrenzt ist. Die Speicherzelle 1 ist becherförmig ausgebildet und bei dem hier dargestellten Ausführungsbeispiel aus Aluminium gefertigt. Becherförmig ist auch der alkaliionenleitende Festelektrolyt 3 ausgebildet. Er ist aus Betaaluminiumoxid gefertigt. Sein Innenraum dient als Anodenraum 4. Seine Abmessungen sind so gewählt, daß zwischen ihm und dem Gehäuse 2 ein zusammenhängender Zwischenraum verbleibt, der als Kathodenraum 5 dient, und in dem die Schwefelelektrode 6 angeordnet ist. Innerhalb des Anodenraums 4 ist ein Sicherheitsbehälter 7 angeordnet, der becherförmig ausgebildet ist. Seine Abmessungen sind so gewählt, daß zwischen seinen Außenflächen und den Innenflächen des Festelektrolyten 3 ein sehr enger Spalt 8 verbleibt. Innerhalb des Sicherheitsbehälters 7 ist eine Kartusche 9 angeordnet, die Natrium 10 enthält. Die Kartusche 9 weist an ihrem ersten Ende, das dem abgerundeten Ende 3R des Festelektrolyten 3 gegenüberliegenden angeordnet ist, eine Öffnung 9E auf, über die das Natrium 10 in den Sicherheitsbehälter 7 fließen kann. Die Abmessungen der Kartusche 9 sind so gewählt, daß zwischen ihrer Außenfläche und der Innenfläche des Sicherheitsbehälters 7 ein Spalt 11 verbleibt. In diesen Spalt 11 fließt das aus der Kartusche 9 ausströmende Natrium 10. Aufgrund eines Überdrucks, der innerhalb der Kartusche 9 herrscht, steigt das Natrium 10 innerhalb des Spaltes 11 bis zum oberen offenen Ende des Sicherheitsbehälters 7 empor, und fließt, da der Sicherheitsbehälter 7 im Verschlußbereich 1V der Speicherzelle offen ist, in den Spalt 8, der zwischen dem Sicherheitsbehälter 7 und dem Festelektrolyten 3 vorgesehen ist. Um die Speicherzelle 1 nach dem erfindungsgemäßen Verfahren zu entsorgen, wird die Speicherzelle 1 in Paraffin (hier nicht dargestellt) eingebettet. Anschließend wird sie im Verschlußbereich 1V geöffnet. Hierbei werden die Verschlußplatte 2V und die Stirnfläche 9F der Kartusche 9 aufgebohrt. Während des Öffnens befindet sich die Speicherzelle 1 in einer horizontalen Position und ist dabei vollständig von Paraffin umgeben. Die Öffnung in der Verschlußplatte 2V wird so weit vergrößert, daß sie dem Durchmesser des Sicherheitsbehälters 7 entspricht. Anschließend wird die Speicherzelle 1 in einem Behälter (hier nicht dargestellt) angeordnet, in dem sich Paraffin befindet, das auf eine Temperatur zwischen 110°C und 115°C erwärmt ist. Die Speicherzelle 1 wird in dem Paraffin so angeordnet, daß die gerade ausgebildete Öffnung (hier nicht dargestellt) nach unten weist. Während einer Verweilzeit von ca. 30 Minuten in dem aufgeheizten Paraffin wird das Natrium 10 der Speicherzelle 1 verflüssigt, und kann dann der geöffneten Kartusche 9 entnommen werden. Um das Natrium auf einfache Weise und auch vollständig aus der Kartusche 9 entfernen zu können, kann beispielsweise ein Steigrohr (hier nicht dargestellt) innerhalb der Kartusche 9 angeordnet werden, das bis zur Öffnung 9E reicht. Über dieses Steigrohr kann Stickstoff in die Kartusche 9 eingeleitet werden, um dort einen Überdruck zu erzeugen. Mit Hilfe dieses Überdrucks kann das Natrium 10 aus der Kartusche 9 herausgepreßt werden.
Das Natrium 10 aus der Kartusche 9 und dem Spalt 11 wird auf dem Boden des Behälters gesammelt, in dem sich das flüssige Paraffin befindet. Anschließend wird die Kartusche 9 aus der Speicherzelle 1 entfernt. Das gleiche gilt für den Sicherheitsbehälters 7. Das Natrium, das sich innerhalb des Spaltes 8 befindet, wird ebenfalls aus der Speicherzelle 1 entfernt, und zusammen mit dem übrigen Natrium auf dem Boden des Behälters gesammelt, in dem sich die Speicherzelle im Augenblick befindet. Die Entfernung der Kartusche 9 und des Sicherheitsbehälters 7 erfolgt mit Spezialwerkzeugen (hier nicht dargestellt), die eine einfache Entnahme aus der Speicherzelle 1 ermöglichen. Sie werden nach der Reingigung in Alkohol einer Metallschmelze zugeführt. Das aus der Speicherzelle 1 entfernte Natrium kann unter einem Schutzgas verfestigt werden. Nach dem Entfernen von Verunreinigungen in Form von Paraffin und Bohrspänen kann das Natrium zur Füllung neuer Speicherzellen benutzt werden. Das metallische Gehäuse 2 wird nach dem vollständigen Entfernen des Natriums aus der Speicherzelle 1, auch dessen aus der Spalte 8, in zwei Hälften unterteilt, und zwar so, daß die Längsachsen dieser Hälften parallel zur Längsachse der Speicherzelle 1 verlaufen. Die beiden Hälften des Gehäuses 2 werden von der Schwefelelektrode 6 abgetrennt, und dem Paraffinbad entnommen. Nach einer Reinigung in einem Alkoholbad (hier nicht dargestellt) können sie zur Herstellung neuer Gehäuse 2 wieder verwendet werden. Der Festelektrolyt 3 mit der anhaftenden Schwefelelektrode 6 wird zu einem Granulat mit einer Korngröße von 5 bis 10 mm verarbeitet. Das Granulat kann thermisch durch Abrösten so weiterverarbeitet werden, daß anschließend Schwefelsäure und schadstoffreie Abfallstoffe zur Endlagerung oder zur Weiterverarbeitung hieraus gewonnen werden können. Andererseits besteht die Möglichkeit das Granulat mittels Wasser auszulaugen, und das deponiefähige Keramikmaterial abzufiltern. Es entstehen dabei natriumpolysulfidhaltige Lösungen. Überschüssiger Schwefel kann durch Zusatz von Natronlauge in Lösung gebracht werden. Konzentration und Stöchiometrie dieser Lösungen sind durch Zusatz von Natronlauge oder elementarem Schwefel so einstellbar, daß sie für die Weiterverarbeitung zu Schwefelfarbstoffen in der chemischen Industrie geeignet sind. Ferner besteht die Möglichkeit, überschüssige, natriumpolysulfidhaltige Lösungen durch oxidative Neutralisation mit Bleichlauge zu entsorgen. Dabei entstehen deponiefähige Neutralsalze und Schwefel als Recyclingprodukte.

Die oben erläuterten Verfahrensschritte sind alle automatisierbar. Die Speicherzellen können beispielweise von Magazinen aus, in denen sie gelagert werden, über ein Förderband zu dem Paraffin transportiert, in dieses automatisch eingebettet und mit Hilfe einer Bohrvorrichtung in der oben beschriebenen Weise geöffnet werden. Die Speicherzellen können anschließend, ebenfalls automatisch, mit der gebildeten Öffnung nach unten weisend in einem mit heißem Paraffin gefüllten Behälter angeordnet werden. Das Entfernen des Natriums, der Kartuschen und der Sicherheitsbehälter aus den Speicherzellen läßt sich ebenfalls automatisieren. Die abgetrennten Kartuschen und Sicherheitsbehälter sowie die Natrium freien Speicherzellen können mit Hilfe einer Vorrichtung aus dem 110°C bis 115°C heißen Paraffin entnommen, und zur Reinigung einem Alkoholbad zugeführt werden. Je nach Umfang der Automatisierungseinrichtung können 30 und mehr Speicherzellen pro Stunde entsorgt werden.

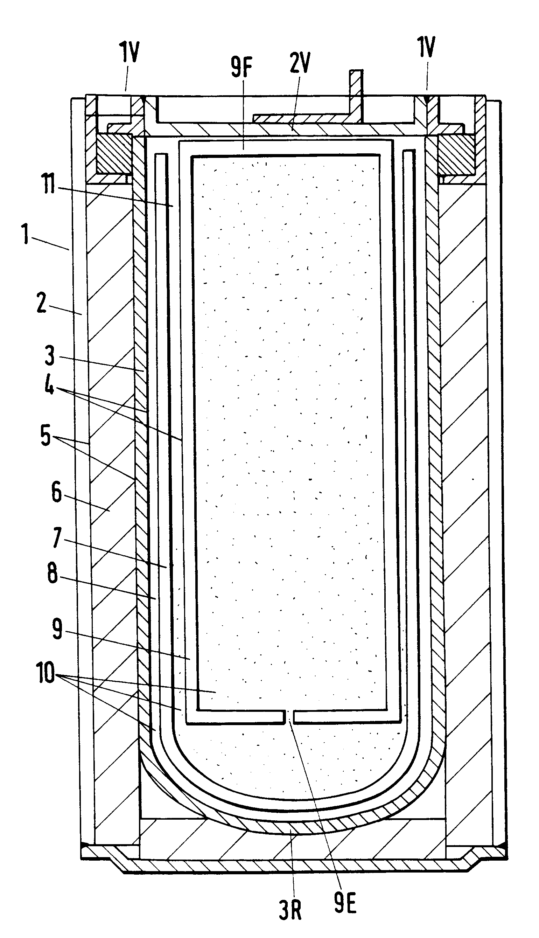

## Patentansprüche

1. Verfahren zur Entsorgung von Speicherzellen (1) auf der Basis von Natrium und Schwefel mit einem Anodenraum (4) und einem Kathodenraum (5), die von einem alkaliionenleitenden Festelektrolyten (3) getrennt und bereichsweise von einem metallischen Gehäuse (2) begrenzt sind, wobei innerhalb des Festelektrolyten (3) eine mit Natrium (10) gefüllte Kartusche (9), ein Sicherheitsbehälter (7) sowie mit Natrium gefüllte Spalte (8, 11) angeordnet sind, und der Kathodenraum (5) zur Aufnahme der Schwefelelektrode (6) vorgesehen ist, **dadurch gekennzeichnet,** daß zuerst das Natrium (10) und anschließend die Reaktionsprodukte und Bauteile aus der Speicherzelle (1) entfernt und ebenso wie das Natrium (10) einer Wiederverwertung oder einer Aufbereitung zu schadstoffreien, lagerfähigen Abfallstoffen zugeführt werden, wobei
jede Speicherzelle (1) geöffnet und die Kartusche (9) und der Sicherheitsbehälter (7) nach dem vollständigen Entfernen des Natriums aus der Speicherzelle (1) dem Gehäuse (2) entnommen werden, welches anschließend in zwei Hälften aufgeteilt und von der Schwefelelektrode abgetrennt wird, daß der Festelektrolyt (3) und die Schwefelelektrode (6) weiter verarbeitet und die Bondteile sowie der Zellenboden abgesondert werden.

2. Verfahren nach Anspruch 1, dadurch gekennzeichnet, daß jede Speicherzelle (1) zunächst in einen wachsähnlichen Werkstoff eingebettet und anschließend ihre Verschlußplatte (2V) im Verschlußbereich (1V) soweit aufgebohrt wird, daß die Öffnung dem Durchmesser des Sicherheitsbehälters (7) entspricht.

3. Verfahren nach einem der Ansprüche 1 oder 2, dadurch gekennzeichnet, daß jede Speicherzelle mit der Öffnung nach unten in einem verflüssigten, wachsähnlichen, auf 110 bis 150°C erwärmten Werkstoff angeordnet und das Natrium (10) aufgeschmolzen und anschließend aus der Kartusche (9), dem Sicherheitsbehälter (7) und den Spalten (8 und 11) entfernt wird.

4. Verfahren nach einem der Ansprüche 1 oder 2, dadurch gekennzeichnet, daß jede Speicherzelle (1) zum Öffnen mit ihrer Längsachse in horizontaler Ebene in festem Paraffin eingebettet und nach dem Öffnen in einem auf 110 bis 115°C erhitzten Paraffinbad angeordnet wird, und daß das flüssige Natrium mit Hilfe eines in der Kartusche (9) erzeugten Überdruckes ausgepreßt wird.

5. Verfahren nach einem der Ansprüche 1 bis 4, dadurch gekennzeichnet, daß die Kartusche (9) und der Sicherheitsbehälter (7) nach dem vollständigen Entfernen des Natriums der Speicherzelle (1) entnommen, gereinigt und einer Metallschmelze zugeführt werden.

6. Verfahren nach einem der Ansprüche 1 bis 5, dadurch gekennzeichnet, daß das Natrium auf dem Boden des das flüssige Paraffin enthaltenden Behälters gesammelt und anschließend unter einem Schutzgas verfestigt wird, und daß nach dem Abscheiden des mitgeführten Paraffins und der Bohrspäne das Natrium zum Füllen von neuen Speicherzellen (1) wieder verwendet wird.

7. Verfahren nach einem der Ansprüche 1 bis 6, dadurch gekennzeichnet, daß nach der Beseitigung des Natriums das metallische Gehäuse (2) der Speicherzelle (1) in zwei Hälften, deren Längsachsen parallel zur Längsachse der Speicherzelle (1) verlaufen, aufgeteilt und von der Schwefelelektrode (6) abgetrennt wird, und daß die beiden Hälften des Gehäuses (2) nach der Reinigung in einem Akoholbad der Fertigung neuer Gehäuse (2) zugeführt werden.

8. Verfahren nach einem der Ansprüche 1 bis 7, dadurch gekennzeichnet, daß der Festelektrolyt (3) einer jeden Speicherzelle (1) mit der anhaftenden Schwefelelektrode (6) zu einem Granulat mit einer Korngröße von 5 bis 10 mm verarbeitet und Bondteile und Zellenboden dabei abgesondert werden.

9. Verfahren nach Anspruch 7, dadurch gekennzeichnet, daß das Granulat thermisch in Wirbelstromöfen abgeröstet und hierbei Schwefelsäure und wiederverwertbare Baustoffe gewonnen werden.

10. Verfahren nach Anspruch 7, dadurch gekennzeichnet, daß das Granulat zu deponiefähigem Keramikbruch und Basiswerkstoff für Schwefelfarbstoffe weiterverarbeitet wird.

11. Verfahren nach Anspruch 7 und 9, dadurch gekennzeichnet, daß überschüssige Na₂Sₓ-Lösungen zu deponiefähigen Neutralsalzen, Schwefel und wiederverwertbaren Werkstoffen verarbeitet werden.

## Claims

1. Method for disposing of storage cells (1) on the basis of sodium and sulphur with an anode space (4) and a cathode space (5) which are separated from an alkali ion-conducting solid electrolyte (3) and are bounded in certain areas by a metallic housing (2), a cartridge (9) which is filled with sodium (10), a safety container (7) and gaps (8, 11) which are filled with sodium being arranged inside the solid electrolyte (3), and the cathode space (5) being provided to receive the sulphur electrode (6), characterized in that firstly the sodium (10) and subsequently the reaction products and components are removed from the storage cell (1) and are fed, as is the sodium (10), to a recycling system or to a system for processing them into waste materials which are free of noxious substances and capable of being stored, each storage cell (1) being opened and the cartridge (9) and the safety container (7) being removed from the housing (2) after the complete removal of the sodium from the storage cell (1), which housing is subsequently divided into two halves and separated from the sulphur electrode, in that the solid electrolyte (3) and the sulphur electrode (6) are reprocessed and the bonded components and the bottom of the cells are separated.

2. Method according to Claim 1, characterized in that each storage cell (1) is initially embedded in a wax-like material and subsequently its closure plate (2V) is bored open in the closure area (1V) to such an extent that the opening corresponds to the diameter of the safety container (7).

3. Method according to one of Claims 1 or 2, characterized in that each storage cell is arranged with the opening pointing downwards in a liquefied, wax-like material which has been heated to 110 to 150°C, and the sodium (10) is molten and is subsequently removed from the cartridge (9), the safety container (7) and the gaps (8 and 11).

4. Method according to one of Claims 1 or 2, characterized in that each storage cell (1) is embedded in solid paraffin in order to open it with its longitudinal axis in the horizontal plane and, after being opened, is arranged in a paraffin bath which has been heated to 110 to 115°C, and in that the liquid sodium is forced out with the aid of an overpressure which is produced in the cartridge (9).

5. Method according to one of Claims 1 to 4, characterized in that, after the complete removal of the sodium, the cartridge (9) and the safety container (7) are removed from the storage cell (1), cleaned and fed to a molten bath.

6. Method according to one of Claims 1 to 5, characterized in that the sodium is collected on the bottom of the container which contains the liquid paraffin and is subsequently solidified under a protective gas, and in that after the separation of the entrained paraffin and the bore chips, the sodium is reused to fill new storage cells (1).

7. Method according to one of Claims 1 to 6, characterized in that, after the removal of the sodium, the metallic housing (2) of the storage cell (1) is divided into two halves (2) whose longitudinal axes extend parallel to the longitudinal axis of the storage cell (1), and is separated from the sulphur electrode (6), and in that the two halves of the housing (2) are fed, after cleaning in an alcohol bath, to means for producing new housings (2).

8. Method according to one of Claims 1 to 7, characterized in that the solid electrolyte (3) of each storage cell (1) with the adhering sulphur electrode (6) is processed to form a granulate with a granular size of 5 to 10 mm and bonded components and cell bottoms are separated off in this process.

9. Method according to Claim 7, characterized in that the granulate is roasted thermally in eddy current furnaces and, in this process, sulphuric acid and recyclable materials are recovered.

10. Method according to Claim 7, characterized in that the granulate is further processed to form ceramic breakage and base material for sulphide dyestuffs.

11. Method according to Claim 7 and 9, characterized in that excess Na₂Sₓ solutions are processed to form neutral salts which are suitable for waste disposal sites, sulphur and recyclable substances.

## Revendications

1. Procédé pour l'élimination d'éléments accumulateurs (1) à base de sodium et de soufre comprenant un compartiment d'anode (4) et un compartiment de cathode (5) séparés par un électrolyte solide (3) conducteur par ions alcalins et délimité par zones par un boîtier métallique (2) et, dans lesquels une cartouche (9) remplie de sodium (10), un récipient de sécurité (7) ainsi que des fentes (8, 11) remplies de sodium sont disposées à l'intérieur de l'électrolyte solide (3), et le compartiment de cathode (5) est prévu pour recevoir l'électrode de soufre (6), caractérisé par le fait que d'abord le sodium (10) et ensuite les produits de réaction et parties constitutives sont retirés de l'élément accumulateur (1) et sont, y compris le sodium, réutilisés ou retraités sous forme de déchets non polluants, se prêtant au stockage, chaque élément accumulateur (1) étant ouvert et la cartouche (9) et le récipient de sécurité (7) étant retirés du boîtier (2) après enlèvement complet du sodium de l'élément accumulateur (1), le boîtier (2) étant ensuite divisé en deux moitiés et séparé de l'électrode de soufre, que l'électrolyte solide (3) et l'électrolyte de soufre (6) sont retraitées et les parties de liaison ainsi que le fond des éléments sont séparés.

2. Procédé suivant la revendication 1, caractérisé par le fait que chaque élément accumulateur (1) est d'abord noyé dans un matériau semblable à la cire et ensuite sa plaque de fermeture (2V) est percée dans la zone de fermeture (1V) de manière que l'ouverture corresponde au diamètre du récipient de sécurité (7).

3. Procédé suivant l'une des revendications 1 ou 2, caractérisé par le fait que chaque élément accumulateur est disposé, l'ouverture tournée vers le bas, dans un matériau semblable à la cire, liquéfiée, portée à une température de 100 à 150°C, et le sodium (10) est fondu et est ensuite retiré de la cartouche (9), du récipient de sécurité (7) et des fentes (8 et 11).

4. Procédé suivant l'une des revendications 1 ou 2, caractérisé par le fait que chaque élément accumulateur (1), en vue de l'ouverture, est noyé dans de la paraffine solide, son axe longitudinal se trouvant dans un plan horizontal, et après ouverture est disposé dans un bain de paraffine porté à 110 à 115°C, et que le sodium liquide est expulsé à l'aide d'une surpression produite dans la cartouche (9).

5. Procédé suivant l'une des revendications 1 à 4, caractérisé par le fait que la cartouche (9) et le récipient de sécurité (7), après enlèvement complet du sodium, sont retirés de l'élément accumulateur (1), nettoyés et refondus.

6. Procédé suivant l'une des revendications 1 à 5, caractérisé par le fait que le sodium est recueilli sur le fond du récipient contenant la paraffine liquide et est ensuite solidifié sous un gaz protecteur, et qu'après de séparation de la paraffine entraînée et des copeaux de perçage, le sodium est réutilisé pour remplir des nouveaux éléments accumulateurs (1).

7. Procédé selon l'une des revendications 1 à 6, caractérisé par le fait qu'après enlèvement du sodium, le boîtier métallique (2) de l'élément accumulateur (1) est divisé en deux moitiés dont les axes longitudinaux s'étendent parallèlement à l'axe longitudinal de l'élément accumulateur (1) et est séparé de l'électrode de soufre (6) et que les deux moitiés de boîtier (2) sont, après nettoyage dans un bain d'alcool, utilisées pour la fabrication de nouveaux boîtiers (2).

8. Procédé selon l'une des revendications 1 à 7, caractérisé par le fait que l'électrolyte solide (3) de chaque élément accumulateur (1) est transformé, avec l'électrode de soufre (6) qui y adhère, en un granulat avec une grosseur des grain de 5 à 10 mm, les parties de liaison et le fond des éléments étant séparés.

9. Procédé suivant la revendication 7, caractérisé par le fait que le granulat est calciné thermiquement dans des fours à flux turbulent avec récupération d'acide sulfurique et de matériaux réutilisables.

10. Procédé suivant la revendication 7, caractérisé par le fait que le granulat est retraité sous forme de fraction de céramique se prêtant au dépôt en décharge et sous forme de matériau de base pour des colorants au soufre.

11. Procédé suivant la revendication 7 et 9, caractérisé par le fait que des solutions Na₂Sₓ excédentaires sont transformées en sels neutres se prêtant au dépôt en décharge, soufre et matériaux réutilisables.
